# EUROPEAN PATENT APPLICATION

(11) **EP 2 687 958 A1**
(43) Date of publication of application: **22.01.2014**
(21) Application number: 12756985.3
(22) Date of filing: 02.03.2012
(51) Int. Cl.: G06F 3/041, G06F 3/048

(54) **INPUT DEVICE**

(30) Priority: 15.03.2011 JP 2011056131
(71) Applicant: Panasonic Corporation, Osaka 571-8501 (JP)
(72) Inventor: NAKAMOTO, Shinji, Osaka 540-6207 (JP)
(74) Representative: Grünecker, Kinkeldey, Stockmair & Schwanhäusser
(86) International application number: PCT/JP2012/001458
(87) International publication number: WO 2012/124279

(57) **Abstract**

Where objects that can be selected by a user are displayed densely on a display screen, the user cannot select an intended selectable object using a selection commanding body such as a finger of the user. An input device is provided in which a selectable object intended by a user is selected temporarily by the proximity position detecting section when the user brings the selection commanding body close to the display screen, and is judged to have been selected as a regular one when the user brings the selection commanding body into contact with the display screen at a position that is within a prescribed distance of the selectable object in a state that the user is notified of its temporary selection.

## Description

### Technical Field

The present invention relates to an input device through which to make a selection input manipulation by directly touching a selectable object displayed on a screen with a finger or the like.

### Background Art

In recent years, with the spread of portable information terminals such as high-performance cell phones and smartphones, touch panel input devices which are equipped with a high-resolution display device and through which input is made by touching the display screen with a finger(s) instead of key input have come be used commonly.

Portable information terminals which are equipped with such input devices have a function that enables browsing of Internet information and have come to provide, by virtue of use of a high-resolution display device, approximately the same level of usability in browsing as PCs (personal computers) do. However, in portable information terminals in which importance is attached to portability, the size of the display screen cannot be increased unlike in PCs. Therefore, in portable information terminals such as cell phones and smartphones having only a palm-top-size display screen, user-selectable objects are displayed densely on the screen even in the case where they are arranged in such a manner that they would not cause any problems if they were display on PCs. This means a problem that users have difficulty making a selection manipulation with a finger.

To solve this problem, Patent document 1, for example, proposes a technique for preventing an erroneous selection and facilitates an input manipulation by disposing a proximity detecting section around a display screen, detecting approach of a finger of the user and determining its position, and enlarging a displayed region including the detected position.

### Prior Art Documents

### Patent Documents

Patent document 1: JP-A-2006-031499

### Summary of the Invention

### Problems to be Solved by the Invention

However, in the configuration of Patent document 1, a displayed region on the display screen is enlarged when a finger of the user has merely come close to it. This means a problem that the enlarged display impairs the listing performance of the other region.

In view of the above problem, an object of the present invention is to provide an input device which can prevent an erroneous selection of a user and facilitate a selection manipulation without impairing the listing performance of information displayed on the display screen.

### Means for Solving the Problems

The input device according to the invention is an input device which has a display unit f or displaying plural selectable objects and selects one of the objects using a selection commanding body, comprising: a proximity position detecting section that detects a position to which the selection commanding body has come close, the position being defined relative to the display unit; a temporary selection determining section that temporarily selects one of the plural objects on the basis of a proximity position detected by the proximity position detecting section; a temporary selection notification section that notifies of the object selected temporarily by the temporary selection determining section; a contact position detecting section that detects a position where the selection commanding body comes into contact with the display unit during notification by the temporary selection notification section; and a regular selection determining section that determines that the temporarily selected object has been selected by the selection commanding body if a distance between a position of the temporarily selected object on the display unit and the contact position detected by the contact position detecting section is within a prescribed distance.

With this configuration, the temporary selection notification section allows a user to recognize a selectable object which is temporarily selected. The user can select an intended selectable object by touching the displaying screen at a position that is close to the selectable object which is temporarily selected while the user is notified of it by the temporary selection notification section.

The input device according to the invention is characterized by including the proximity position detecting section which detects a distance between the display unit and the selection commanding body; the temporary selection determining section which cancels the temporary selection if the distance between the display unit and the selection commanding body has become longer than a prescribed distance; and the temporary selection notification section which stops the notification if the temporary selection is canceled by the temporary selection determining section.

With this configuration, if an unintended selectable object is selected temporarily, the user can stop the notification of the temporarily selected object and cancel the temporarily selection by making the selection commanding body distant from the display unit by the prescribed distance or more. The user is thus allowed to select an intended selectable object.

The input device according to the invention is characterized by comprising the temporary selection determining section which temporarily selects one of the plural objects only if the distance between the display unit and the selection commanding body is in a prescribed range.

With this configuration, an event can be prevented that the temporarily selected selectable object is switched contrary to the intention of the user when the user brings the selection commanding body even closer to the display unit in a state that a selectable object that the user intends to select is selected temporarily by the temporary selection determining section as a result of an action of the user that he or she brought the selection commanding body to the selectable object so that their distance becomes in the prescribed range. The user is thus allowed to select an intended selectable object.

### Advantageous Effects of the Invention

As described above, the input device according to the invention allows a user to select an intended selectable object without impairing the listing performance of displayed information even in the case where selectable objects are displayed densely close to each other.

### Brief Description of the Drawings

[Fig. 1] Fig. 1 shows an appearance of the input device according to the first embodiment of the present invention.
[Fig. 2] Fig. 2 is a block diagram showing the configuration of the input device according to the first embodiment of the invention.
[Fig. 3] Fig. 3 is enlarged views of a selectable object group G105 shown in Fig. 1 and its neighborhood in the first embodiment of the invention.
[Fig. 4] Fig. 4 is a flowchart showing how the input device according to the first embodiment of the invention operates.
[Fig. 5] Fig. 5 is a block diagram showing the configuration of an input device according to a second embodiment of the invention.
[Fig. 6] Fig. 6 is enlarged views of the selectable object group G105 shown in Fig. 1 and its neighborhood in the second embodiment of the invention.
[Fig. 7] Fig. 7 is a flowchart showing how the input device according to the second embodiment of the invention operates.
[Fig. 8] Fig. 8 is a block diagram showing the configuration of an input device according to a third embodiment of the invention.
[Fig. 9] Fig. 9 is enlarged views of the selectable object group G105 shown in Fig. 1 and its neighborhood in the third embodiment of the invention.
[Fig. 10] Fig. 10 is a flowchart showing how the input device according to the third embodiment of the invention operates.

### Mode for Carrying out the Invention

Embodiments of the present invention will be hereinafter described with reference to the drawings.

### (Embodiment 1)

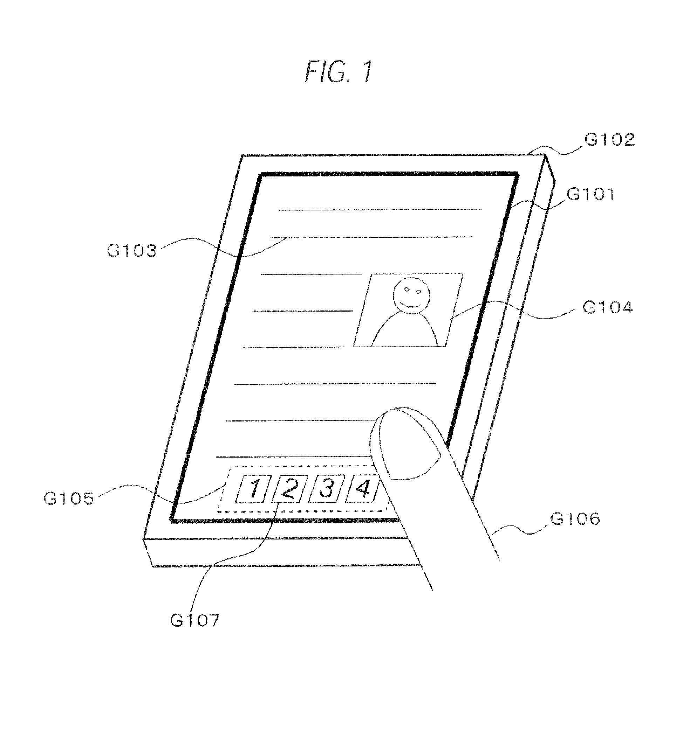

An input device according to a first embodiment of the invention will be described with reference to Figs. 1-4.

Fig. 1 shows an appearance of the input device according to the first embodiment of the invention.

As shown in Fig. 1, the input device 100 according to the first embodiment is composed of a display screen G101 and a body G102 which supports the display screen G101. As an example, text information G103, image information G104, and a selectable object group G105 from which a user can make a selection are displayed on the display screen G101. The selectable object group G105 includes selectable objects having numbers "1" to "4." The user can select a function that is assigned to each selectable item of the selectable object group G105 by selecting one selectable object using a selection commanding body G106 such as his or her finger. For example, if the No. 2 selectable object G107 of the selectable object group G105 is selected, text information, image information, etc. that are different from the currently displayed text information G103 and image information G104 are displayed.

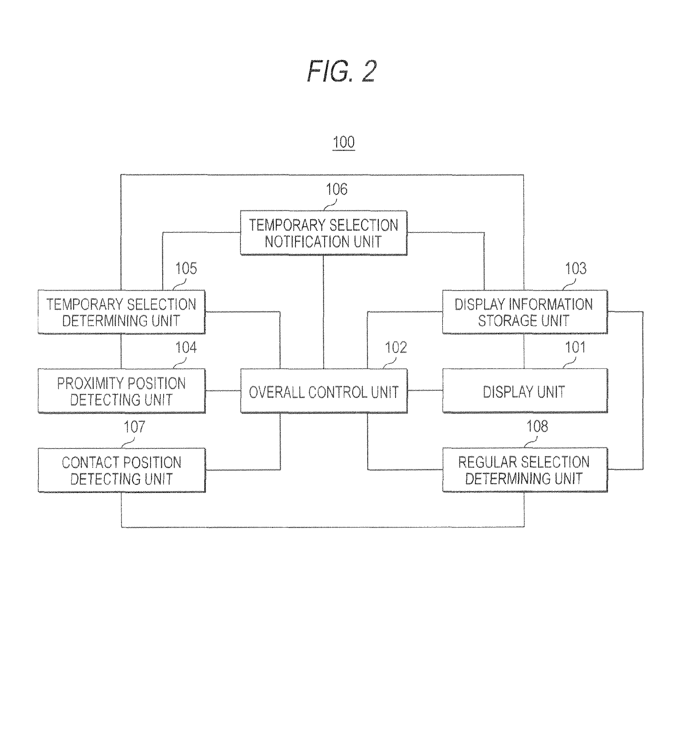

Fig. 2 is a block diagram showing the configuration of the input device according to the first embodiment of the invention.

As shown in Fig. 2, the input device 100 according to the first embodiment is equipped with a display unit 101, an overall control unit 102, a display information storage unit 103, a proximity position detecting unit 104, a temporary selection determining unit 105, a temporary selection notification unit 106, a contact position detecting unit 107, and a regular selection determining unit 108.

Instructed by the overall control unit 102, the display unit 101 displays display information stored in the display information storage unit 103. The display information consists of the text information G103, the image information G104, the selectable object group G105, etc. (exemplified in Fig. 1) and is held together with pieces of display arrangement information on the display screen

G101 of those respective kinds of information.

The proximity position detecting unit 104 detects that the selection commanding body G106 shown in Fig. 1 has come close to the display screen G101, detects a position, to which the selection commanding body G106 has come close, in a horizontal plane that is parallel with the display screen G101, and communicates information indicating the detected proximity position to the temporary selection determining unit 105. The temporary selection determining unit 105 determines, as a temporary selection, one selectable object that is closest to the proximity position on the basis of the proximity position information received from the proximity position detecting unit 104 and the display information held by the display information storage unit 103.

The temporary selection notification unit 106 notifies the user of the selectable object that has been determined as the temporary selection by the temporary selection determining unit 105. One example notification method is as follows: Instructed by the overall control unit 102, the temporary selection notification unit 106 manipulates the display information stored in the display information storage unit 103 so that the temporarily selected selectable object displayed on the display unit 101 is changed in display color or flashed.

The contact position detecting unit 107 detects that selection commanding body G106 shown in Fig. 1 has touched the display screen G101, detects a contact position of the selection commanding body G106 on the display screen G101, and communications information indicating the detected contact position to the regular selection determining unit 108. The regular selection determining unit 108 calculates a distance between the contact position and the temporarily selected selectable object on the basis of the contact position information and the display position information of the temporarily selected selectable object and accepts an input with a judgment that a regular selection has been made if the calculated distance is within a prescribed distance α.

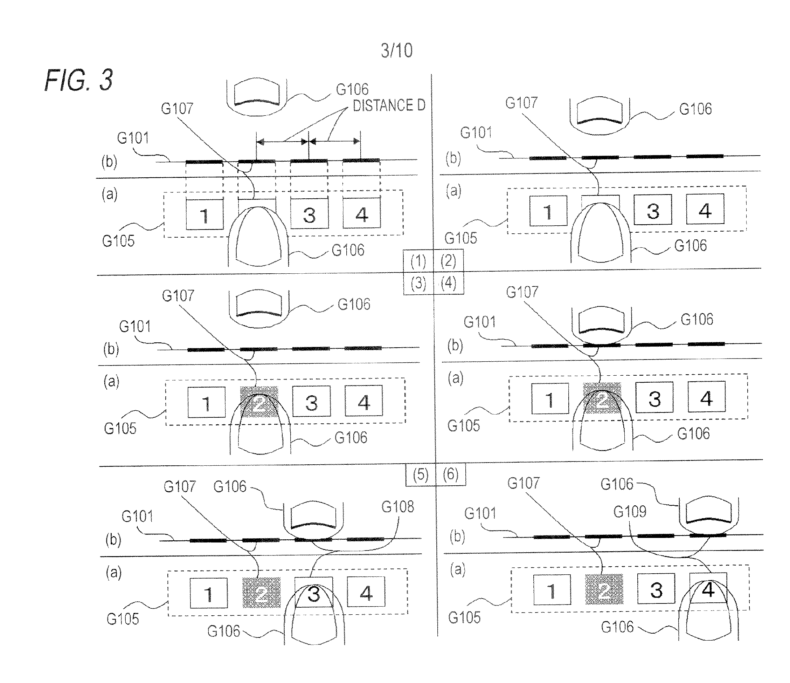

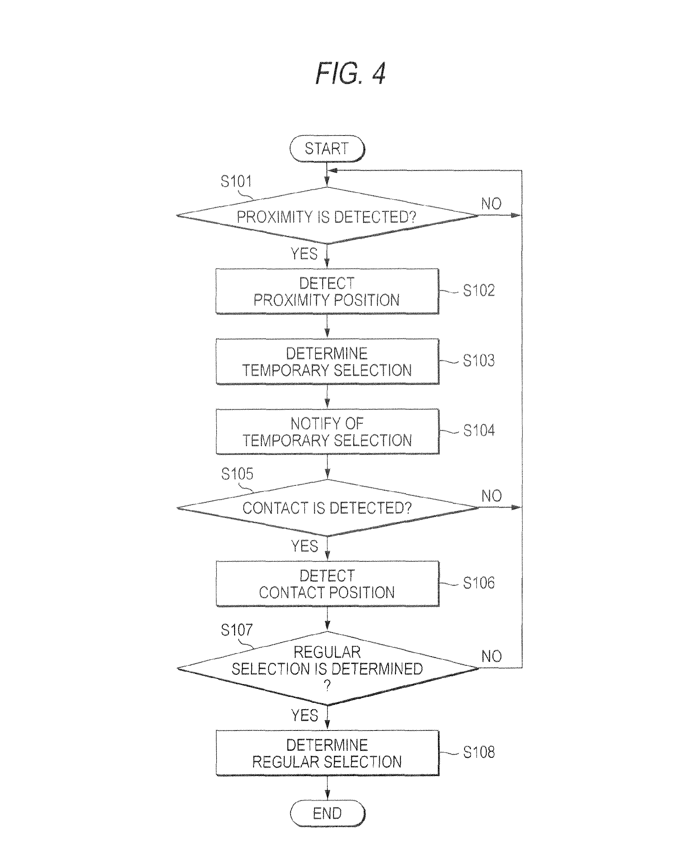

Next, a procedure according to which the user selects the selectable object G107 from the selectable object group G105, that is, a procedure which is followed until the input device according to the first embodiment of the invention accepts an input, will be described with reference to Figs. 3 and 4.

Fig. 3 is enlarged views of the selectable object group G105 (exemplified in Fig. 1) being displayed on the display screen G101 and its neighborhood. Parts (1) to (4) of Fig. 3 are views showing transitions to contact of the selection commanding body G106 to the display screen G101 on which the selectable object G107 is displayed. Parts (5) and (6) of Fig. 3 are views of cases that after the state of part (3) of Fig. 3 the selection commanding body G106 touches the display screen G101 at the positions of the No. 3 and No. 4 selectable objects of the selectable object group G105, respectively. Parts (a) of Fig. 3 are views, as viewed from above, of the display screen G101, and parts (b) of Fig. 3 are views, as viewed from the side, of the display screen G101. In parts (b) of Fig. 3, for the sake of convenience, the selectable objects displayed on the display screen G101 are drawn by thick lines, which, however, does not mean that asperities need to be formed on the display screen. As shown in part (1) of Fig. 3, the centers of the No. 2, No. 3, and No. 4 selectable objects of the selectable object group G105 are spaced from each other by a distance D.

Fig. 4 is a flowchart showing how the input device according to the first embodiment of the invention operates.

First, a description will be made of a transition from a state (corresponds to part (1) of Fig. 3) that the selection commanding body G106 is sufficiently distant from the display screen G101 to a state (corresponds to part (2) of Fig. 3) that the selection commanding body G106 is close to the display screen G101.

At step S101, the proximity position detecting unit 104 monitors whether or not the selection commanding body G106 has come close to the display screen G101. In the state that the selection commanding body G106 is sufficiently distant from the display screen G101 (part (1) of Fig. 3), the proximity position detecting unit 104 cannot detect the selection commanding body G106 being close to the display screen G101 and hence step S101 is executed repeatedly. Then, if the selection commanding body G106 has come close to the display screen G101 (see part (2) of Fig. 3), the proximity position detecting unit 104 detects the selection commanding body G106 being close to the display screen G101 and the process moves to step S102.

At step S102, the proximity position detecting unit 104 detects a proximity position, that is, a position of the selection commanding body G106 in a horizontal plane that is parallel with the display screen G101, and passes information indicating the detected proximity position to the temporary selection determining unit 105. At the next step S103, the temporary selection determining unit 105 acquires pieces of arrangement information on the display screen of the currently displayed selectable objects from the display information that is held by the display information storage unit 103, determines one selectable object that is closest to the selection commanding body G106 on the basis of the information indicating the proximity position detected at step S102, and employs the determined selectable object as a temporary selection. In the state shown in part (2) of Fig. 3, the selectable object G107 is selected temporarily because it is closest to the proximity position of the selection commanding body G106. At the next step S104, the temporary selection notification unit 106 manipulates the display information of the selectable object G107 which is held by the display visually information storage unit 103 and thereby notifies the user through the display unit 101 according to an instruction from the overall control unit 102. One example notification method is as follows, The temporary selection notification unit 106 can notify the user of the temporarily selected selectable object by changing the display color of the selectable object G107 (see part (3) of Fig. 3).

At the next step S105, in the state that the notification of the temporarily selected selectable object G107 is being made (part (3) of Fig. 3), the contact position detecting unit 107 is monitoring whether the selection commanding body G106 has touched the display screen G101. In this state, no contact to the display screen G101 is detected and hence the process returns to step S101.

Then, if the selection commanding body G106 has come further close to the display screen G101 and touched the display screen G101 (see part (4) of Fig. 3) in the state that the notification of the temporarily selected selectable object G107 is being made (part (3) of Fig. 3), at step S105 the contact position detecting unit 107 detects that the selection commanding body G106 has touched the display screen G101. And the process moves to step S106.

At step S106, the contact position detecting unit 107 detects a contact position of the selection commanding body G106 on the display screen G101 and passes information indicating the detected contact position to the regular selection determining unit 108.

At step S107, the regular selection determining unit 108 calculates a distance between the contact position and the display position of the selectable object G107 on the basis of the contact position information and the display information of the selectable object G107 stored in the display information storage unit 103. If the calculated distance is longer than a prescribed distance α, the temporarily selected selectable object G107 has not been selected actually and hence the process returns to step S101. If the distance calculated by the regular selection determining unit 108 is within the prescribed distance α, the process moves to step S108. This operation will be described with reference to parts (4)-(6) of Fig. 3.

In the case shown in part (4) of Fig. 3, the selection commanding body G106 is located right over and in contact with the selectable object G107. Assuming that the prescribed distance α is longer than the distance D and shorter than two times the distance D (D < α < 2D), the regular selection determining unit 108 should judge that the distance between the contact position of the selection commanding body G106 and the display position of the selectable object G107 is shorter than the prescribed distance α. The process moves to step S108

In the case shown in part (6) of Fig. 3, the selection commanding body G106 is located right over and in contact with the selectable object G109. Assuming that the prescribed distance α is longer than the distance D and shorter than two times the distance D (D < α < 2D), the regular selection determining unit 108 should judge that the distance between the contact position of the selection commanding body G106 and the display position of the selectable object G109 is longer than the prescribed distance α. The process returns to step S101.

In the case shown in part (5) of Fig. 3, the selection commanding body G106 is located right over and in contact with the selectable object G108. Assuming that the prescribed distance α is longer than the distance D and shorter than two times the distance D (D < α < 2D), the regular selection determining unit 108 should judge that the distance between the contact position of the selection commanding body G106 and the display position of the selectable object G108 is shorter than the prescribed distance α. The process moves to step S108.

At step S108, the temporarily selected selectable object G107 is regarded as having been selected as a regular one. And an input is accepted with a judgment that the selectable object G107 has been selected as a regular one by the user.

The contact position detecting unit 107 notifies the regular selection determining unit 108 of a contact position of the selection commanding body G106 on the display screen G101 as contact position information. Alternatively, the contact position detecting unit 107 may notify the regular selection determining unit 108 of a position where the selection commanding body G106 has left the display screen G101 after touching it as contact position information.

As described above, in the embodiment, when the user is going to select the selectable object G107, as shown in part (3) of Fig. 3 the user is notified that the selection commanding body G106 has come close to the selectable object G107 and can thereby recognize the temporarily selected selectable object. Even if the selection commanding body G106 erroneously touches the display screen G101 at the position of the selectable object G108 (see part (5) of Fig. 3), an input is accepted with a judgment that the selectable object G107 has been selected. This makes it possible to prevent the user from making an unintended, erroneous manipulation.

### (Embodiment 2)

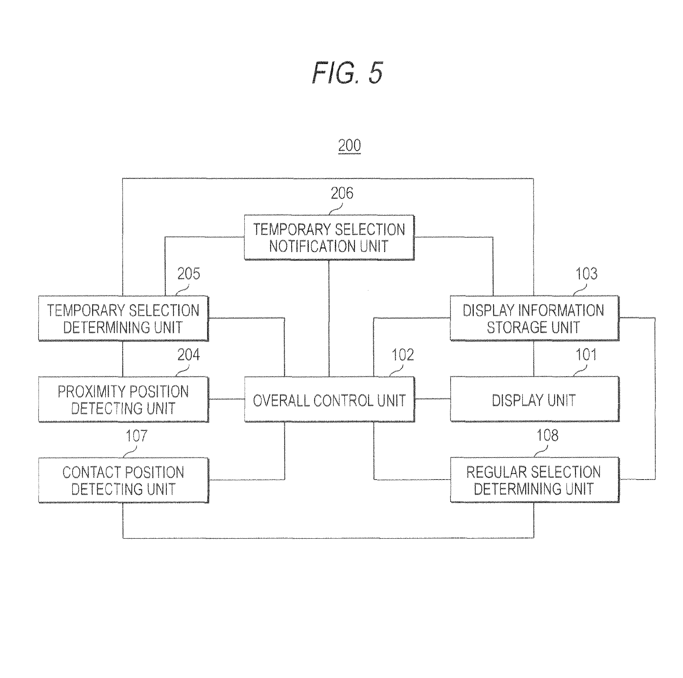

Fig. 5 is a block diagram showing the configuration of an input device according to a second embodiment of the invention.

As shown in Fig. 5, the input device 200 according to the second embodiment is equipped with a display unit 101, an overall control unit 102, a display information storage unit 103, a proximity position detecting unit 204, a temporary selection determining unit 205, a temporary selection notification unit 206, a contact position detecting unit 107, and a regular selection determining unit 108.

Constituent elements in Fig. 5 having the same ones in Fig. 2 are given the same reference symbols as the latter, and descriptions therefor will be omitted in this embodiment. The input device according to the second embodiment of the invention has the same appearance as that according to the first embodiment of the invention and hence will not be illustrated. Descriptions will be made using Fig. 1.

The proximity position detecting unit 204 detects that the selection commanding body G106 shown in Fig. 1 has come close to the display screen G101, detects a position, to which the selection commanding body G106 has come close, in a horizontal plane that is parallel with the display screen G101 and a vertical distance between the selection commanding body G106 and the display screen G101, and communicates information indicating the detected proximity position and the detected vertical distance to the temporary selection determining unit 205. If the vertical distance communicated from the proximity position detecting unit 204 is shorter than a prescribed distance β, the temporary selection determining unit 205 determines, as a temporary selection, one selectable object that is closest to the proximity position on the basis of the proximity position information received from the proximity position detecting unit 204 and the display information held by the display information storage unit 103.

The temporary selection notification unit 206 notifies the user of the selectable object that has been determined as the temporary selection by the temporary selection determining unit 205. No example notification method will be described because the same example notification method as described in the first embodiment of the invention can be used.

Now, a description will be made of an operation that is performed when the vertical distance between the selection commanding body G106 and the display screen G101 detected by the proximity position detecting unit 204 is longer than or equal to the prescribed distance β. If the vertical distance communicated from the proximity position detecting unit 204 is longer than or equal to the prescribed distance β, the temporary selection determining unit 205 cancels a current temporary selection of a selectable object. The temporary selection notification unit 206 stops notifying the user of the temporarily selected selectable object whose temporary selection has thus been canceled.

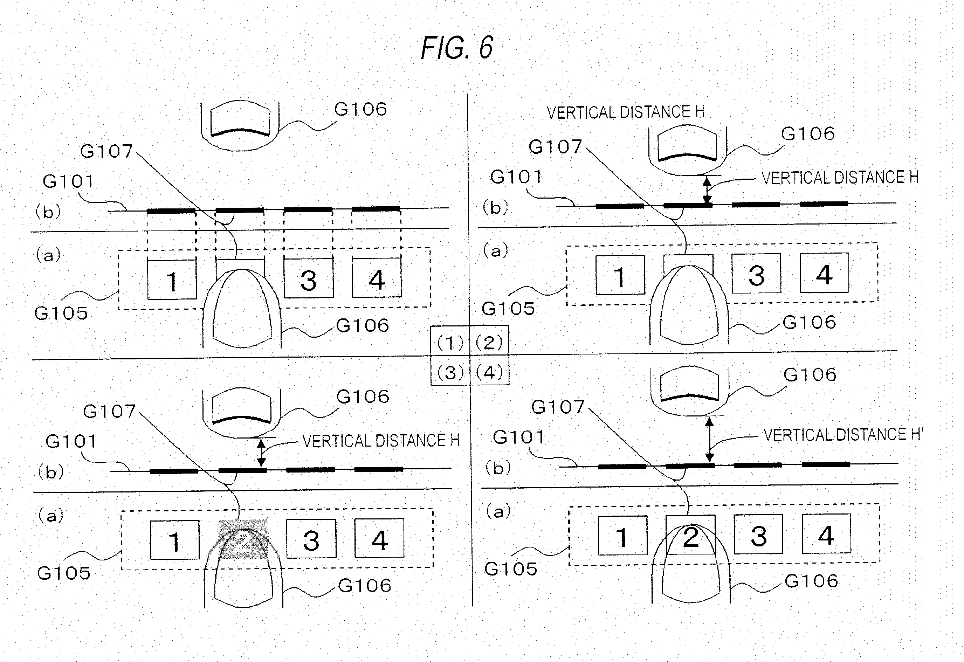

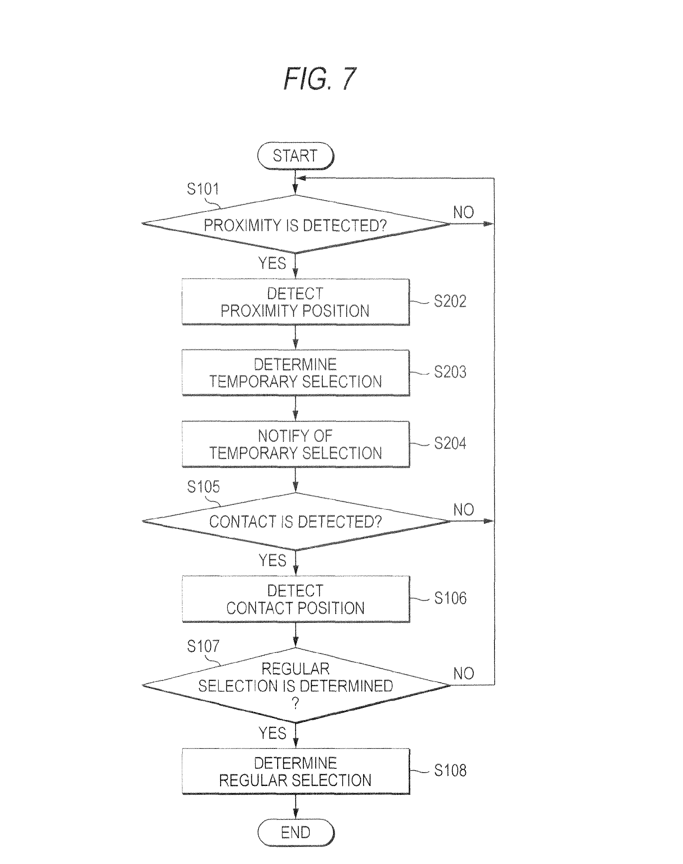

Next, a procedure for canceling the temporary selection after the user selected the selectable object G107 temporarily from the selectable object group G105 will be described with reference to Figs. 6 and 7.

Fig. 6 is enlarged views of the selectable object group G105 (exemplified in Fig. 1) being displayed on the display screen G101 and its neighborhood. Parts (1) to (4) of Fig. 6 are views showing transitions that occur as the selectable object G107 is selected temporarily as a result of coming into proximity of the selection commanding body G106 to the selectable object G107, the temporary selection notification unit 206 makes notification of the temporary selection of the selectable object G107, the temporary selection is canceled as a result of the selection commanding body G106's going away from the display screen G101 in the vertical direction, and the notification of the temporary selection is stopped. Parts (a) of Fig. 6 are views, as viewed from above, of the display screen G101, and parts (b) of Fig. 6 are views, as viewed from the side, of the display screen G101. In parts (b) of Fig. 6, for the sake of convenience, the selectable objects displayed on the display screen G101 are drawn by thick lines, which, however, does not mean that asperities need to be formed on the display screen.

Fig. 7 is a flowchart showing how the input device according to the second embodiment of the invention operates. Steps in Fig. 7 having the same ones in Fig. 4 are given the same reference symbols as the latter and descriptions therefor will be omitted in this embodiment.

First, a description will be made of a transition from a state (corresponds to part (1) of Fig. 6) that the selection commanding body G106 is sufficiently distant from the display screen G101 to a state (corresponds to part (2) of Fig. 6) that the selection commanding body G106 is close to the display screen G101.

At step S101, the proximity position detecting unit 204 monitors whether or not the selection commanding body G106 has come close to the display screen G101. In the state that the selection commanding body G106 is sufficiently distant from the display screen G101 (part (1) of Fig. 6), the proximity position detecting unit 204 cannot detect the selection commanding body G106 being close to the display screen G101 and hence step S101 is executed repeatedly. Then, if the selection commanding body G106 has come close to the display screen G101 (see part (2) of Fig. 6), the proximity position detecting unit 204 detects the selection commanding body G106 being close to the display screen G101 and the process moves to step S202.

At step S202, the proximity position detecting unit 204 detects a proximity position, that is, a position of the selection commanding body G106 in a horizontal plane that is parallel with the display screen G101, and a vertical distance between the selection commanding body G106 and the display screen G101, and passes information indicating the detected proximity position and the detected vertical distance to the temporary selection determining unit 205. The vertical distance is represented by H (see part (2) of Fig. 6), and the following description will be made with an assumption that the vertical distance H is shorter than the prescribed distance β.

At the next step S203, if the vertical distance H detected by the proximity position detecting unit 204 is shorter than the prescribed distance β, the temporary selection determining unit 205 acquires pieces of arrangement information on the display screen of the currently displayed selectable objects from the display information that is held by the display information storage unit 103, determines one selectable object that is closest to the selection commanding body G106 on the basis of the information indicating the proximity position detected at step S202, and employs the determined selectable object as a temporary selection. In the state shown in part (2) of Fig. 6, the selectable object G107 is selected temporarily because it is closest to the proximity position of the selection commanding body G106.

At the next step S204, the temporary selection notification unit 206 manipulates the display information of the selectable object G107 which is held by the display information storage unit 103 and thereby notifies the user visually through the display unit 101 according to an instruction from the overall control unit 102. One example notification method is as follows: The temporary selection notification unit 106 can notify the user of the temporarily selected selectable object by changing the display color of the selectable object G107 (see part (3) of Fig. 6).

The following steps S105-S108 are the same as in Fig. 4 and hence will not be described.

Next, a case that a transition has occurred from a state (part (3) of Fig. 6) that the selectable object G107 is selected temporarily and the user is being notified of its temporary selection to a state (part (4) of Fig. 6) that the selection commanding body G106 has gone away from the display screen G101 to produce a vertical distance H' which is assumed to be longer than the prescribed distance β.

Step S204 is executed in the state shown in part (3) of Fig. 6. At step S105, the contact position detecting unit 107 does not detect contact to the display screen G101. As a result, the process returns to step S101, where the proximity position detecting unit 204 detects that the temporary selection notification unit 106 is close to the display screen G101. The process moves to step S202.

At step S202, the proximity position detecting unit 204 detects a vertical distance H' between the selection commanding body G106 and the display screen G101 and a position of the selection commanding body G106 in the horizontal plane that is parallel with the display screen G101, and passes information indicating the proximity position and the detected vertical distance to the temporary selection determining unit 205.

At the next step S203, if the vertical distance H' detected by the proximity position detecting unit 204 is longer than the prescribed distance β, the temporary selection determining unit 205 cancels the current temporary selection of the selectable object G107.

At the next step S204, the temporary selection notification unit 206 manipulates the display information of the selectable object G107 which is held by the display information storage unit 103 and thereby stops the notification through the display unit 101 according to an instruction from the overall control unit 102.

It is noted that the vertical distance between the selection commanding body G106 and the display screen G101 need not be correlated with the position of the selection commanding body G106 in the horizontal plane that is parallel with the display screen G101.

As described above, in the embodiment, when the user has erroneously selected the selectable object G107 temporarily in an attempt to select a selectable object other than the selectable object G107, the temporary selection of the selectable object G107 is canceled and the notification is stopped by the user's moving the selection commanding body G106 away from the display screen G101. As a result, the user is allowed to again try to select the intended selectable object. This makes it possible to prevent the user from making an unintended, erroneous manipulation.

### (Embodiment 3)

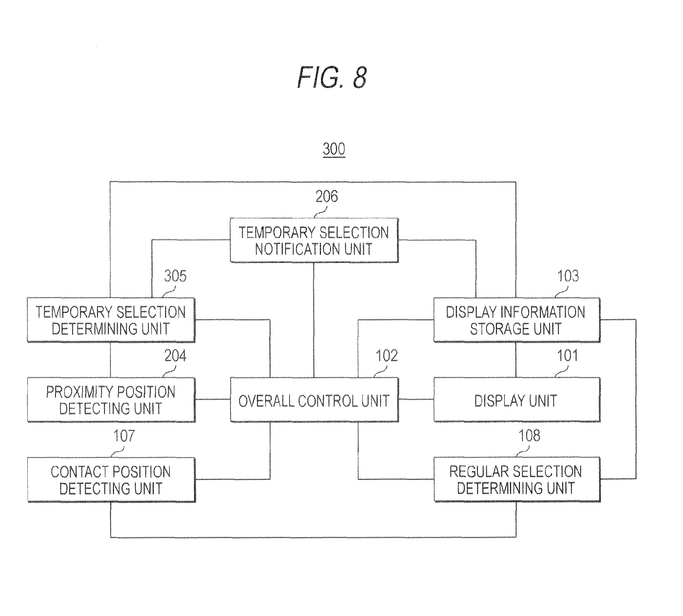

Fig. 8 is a block diagram showing the configuration of an input device according to a third embodiment of the invention.

As shown in Fig. 8, the input device 300 according to the third embodiment is equipped with a display unit 101, an overall control unit 102, a display information storage unit 103, a proximity position detecting unit 204, a temporary selection determining unit 305, a temporary selection notification unit 206, a contact position detecting unit 107, and a regular selection determining unit 108.

Constituent elements in Fig. 8 having the same ones in Fig. 5 are given the same reference symbols as the latter, and descriptions therefor will be omitted in this embodiment. The input device according to the third embodiment of the invention has the same appearance as that according to the first embodiment of the invention and hence will not be illustrated. Descriptions will be made using Fig. 1.

If the vertical distance communicated from the proximity position detecting unit 204 is in a prescribed range, that is, it is longer than a prescribed distance γ and shorter than a prescribed distance β (γ < (vertical distance) < β), the temporary selection determining unit 305 determines, as a temporary selection, one selectable object that is closest to the proximity position on the basis of the proximity position information received from the proximity position detecting unit 204 and the display information held by the display information storage unit 103.

Now, a description will be made of an operation that is performed when the vertical distance between the selection commanding body G106 and the display screen G101 detected by the proximity position detecting unit 204 is shorter than or equal to the prescribed distance γ. If the vertical distance communicated from the proximity position detecting unit 204 is shorter than or equal to the prescribed distance γ, the temporary selection determining unit 305 fixes a current temporary selection of a selectable object instead of canceling it.

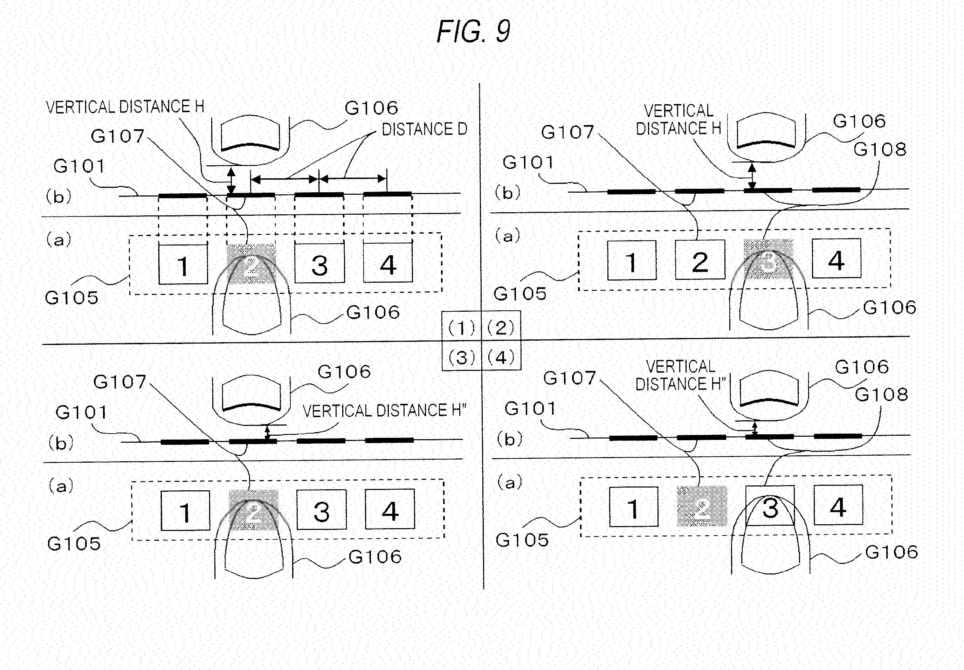

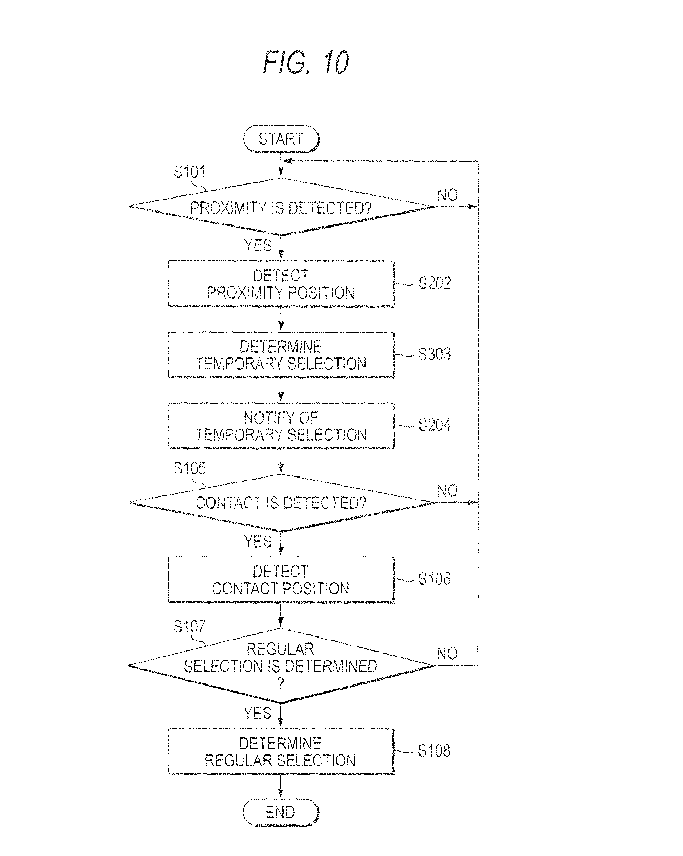

Next, a procedure according to which the user selects the selectable object G108 as a regular one after selecting the selectable object G107 temporarily from the selectable object group G105 will be described with reference to Figs. 9 and 10.

Fig. 9 is enlarged views of the selectable object group G105 (exemplified in Fig. 1) being displayed on the display screen G101 and its neighborhood. Part (1) of Fig. 9 is a view in a state that the selection commanding body G106 is distant from the display screen G101 by a vertical distance H (the same state as shown in part (3) of Fig. 6). It is assumed that the vertical distance H is shorter than the prescribed distance β and longer than the prescribed distance γ. Part (2) of Fig. 9 is a view in a state that the selection commanding body G106 has been moved parallel with the display screen G101 from the position shown in part (1) of Fig. 9 to right over the selectable object G108. Part (3) of Fig. 9 is a view in a state that the selection commanding body G106 has been moved from the position shown in part (1) of Fig. 9 perpendicularly to the display screen G101 so as to come closer to it and have a vertical distance H". It is assumed that the vertical distance H" is shorter than the prescribed distance γ. Part (4) of Fig. 9 is a view in a state that the selection commanding body G106 has been moved from the position shown in part (3) of Fig. 9 to right over the selectable object G108 while the vertical distance H" is maintained. Parts (a) of Fig. 9 are views, as viewed from above, of the display screen G101, and parts (b) of Fig. 9 are views, as viewed from the side, of the display screen G101. In parts (b) of Fig. 6, for the sake of convenience, the selectable objects displayed on the display screen G101 are drawn by thick lines, which, however, does not mean that asperities need to be formed on the display screen.

Fig. 10 is a flowchart showing how the input device according to the third embodiment of the invention operates. Steps in Fig. 10 having the same ones in Fig. 7 are given the same reference symbols as the latter and descriptions therefor will be omitted in this embodiment.

First, a description will be made of an operation that is performed until the selection commanding body G106 comes close to the display screen G101 (vertical distance: H) and the selectable object G107 is selected temporarily (the state shown in part (1) of Fig. 9).

At step S101, the proximity position detecting unit 204 detects that the selection commanding body G106 has come close to the display screen G101. At step S202, the proximity position detecting unit 204 detects the vertical distance H and a proximity position, and passes the vertical distance H and information indicating the detected proximity position to the temporary selection determining unit 305. At the next step S303, if the vertical distance H detected by the proximity position detecting unit 204 is shorter than the prescribed distance β and longer than the prescribed distance γ, the temporary selection determining unit 305 acquires pieces of arrangement information on the display screen of the currently displayed selectable objects from the display information that is held by the display information storage unit 103, determines one selectable object that is closest to the selection commanding body G106 on the basis of the information indicating the proximity position detected at step S202, and employs the determined selectable object as a temporary selection. In the state shown in part (1) of Fig. 9, the selectable object G107 is selected temporarily because it is closest to the proximity position of the selection commanding body G106. At the next step S204, the temporary selection notification unit 206 notifies the user visually through the display unit 101 in the manner shown in part (1) of Fig. 9.

Next, a description will be made of a case that the selection commanding body G106 has been moved parallel with the display screen G101 and a transition has been made from the state shown in part (1) of Fig. 9 to the state shown in part (2) of Fig. 9.

Since no contact of the selection commanding body G106 to the display screen G101 is detected at step S105, the process of the flowchart returns to step S101. At step S101, the proximity position detecting unit 204 detects that the selection commanding body G106 is close to the display screen G101. The process moves to step S202, where the proximity position detecting unit 204 detects the vertical distance H and a proximity position, and passes the vertical distance H and information indicating the detected proximity position to the temporary selection determining unit 305. At this time, the proximity position information indicates the position in the horizontal plane that is parallel with the display screen G101 and right over the No. 3 selectable object G108 of the selectable object group G105. Therefore, at steps S303 and S204, the selectable object G108 is selected temporarily and the user is notified of that fact like the selectable object G107 was selected temporarily and the user was notified of that fact in the state shown in part (1) of Fig. 9. This operation means that if the selection commanding body G106 is moved over the display screen G101 in a state that the vertical distance between the selection commanding body G106 and the display screen G101 is longer than the prescribed distance β and shorter than the prescribed distance γ, the temporarily selected selectable object is switched depending on the destination position in the horizontal plane of the display screen G101.

Next, a description will be made of a case that the selection commanding body G106 has been moved perpendicularly to the display screen G101 and a transition has been made from the state shown in part (1) of Fig. 9 to the state shown in part (3) of Fig. 9.

The description starts from step S105 (the state shown in part (1) of Fig. 9). Since no contact of the selection commanding body G106 to the display screen G101 is detected at step S105, the process of the flowchart returns to step S101. At step S101, the proximity position detecting unit 204 detects that the selection commanding body G106 is close to the display screen G101. The process moves to step S202, where the proximity position detecting unit 204 detects the vertical distance H" and a proximity position, and passes the vertical distance H" and information indicating the detected proximity position to the temporary selection determining unit 305. At the next step S303, if the vertical distance H" detected by the proximity position detecting unit 204 is shorter than the prescribed distance γ, the temporary selection determining unit 305 fixes the temporary selection of the selectable object G107 which is selected temporarily at present. At the next step S204, the temporary selection notification unit 206 continues the notification of the selectable object G107. Since no contact of the selection commanding body G106 to the display screen G101 is detected at step S105, the process returns to step S101.

Next, a description will be made of a case that the selection commanding body G106 has been moved parallel with the display screen G101 while the vertical distance H" is maintained and a transition has been made from the state shown in part (3) of Fig. 9 to the state shown in part (4) of Fig. 9.

At step S101, the proximity position detecting unit 204 detects that the selection commanding body G106 is close to the display screen G101. The process moves to step S202, where the proximity position detecting unit 204 detects the vertical distance H" and a proximity position, and passes the vertical distance H" and information indicating the detected proximity position to the temporary selection determining unit 305. At the next step S303, since the vertical distance H" communicated from the proximity position detecting unit 204 is shorter than the prescribed distance γ, the notification of the selectable object G107 which is selected temporarily at present is continued.

As described above, in this embodiment, each time the user moves the selection commanding body G106 while maintaining a state that the vertical distance between the selection commanding body G106 and the display screen G101 is shorter than the prescribed distance β and longer than the prescribed distance γ, the temporary selected selectable object is switched to a selectable object having a shortest distance from the selection commanding body G106 in the horizontal plane of the display screen G101. The temporary selected selectable object can be fixed by making the vertical distance shorter than the prescribed distance y. This prevents an event that the user erroneously moves the selection commanding body G106 parallel with the display screen G101 in an attempt to bring the selection commanding body G106 into contact with the display screen G101 after making a temporary selection, as a result of which the temporary selection of the intended selectable object is canceled and an unintended selectable object is selected. Thus, the user can be prevented from making an unintended, erroneous manipulation.

The present application is based on Japanese Patent Application No. 2011-056131 filed on March 15, 2011, the disclosure of which is incorporated herein by reference.

### Industrial Applicability

The input device according to the invention can be applied to cell phones, car navigation apparatus which are equipped with a high-resolution display device and employ an input method in which an object on the display screen that is intended by a user is selected when a finger of the user touches the display screen.

### Description of Symbols

- G102: BodyG101:: Display screen
- G103:: Text information
- G104:: Image information
- G105, G107, G108, G109:: Selectable object group
- G106:: Selection commanding body
- 100, 200, 300:: Input device
- 101:: Display unit
- 102:: Overall control unit
- 103:: Display information storage unit
- 104, 204:: Proximity position detecting unit
- 105, 205, 305:: Temporary selection determining unit
- 106, 206:: Temporary selection notification unit
- 107:: Contact position detecting unit
- 108:: Regular selection determining unit

## Claims

1. An input device which has a display unit for displaying plural selectable objects and selects one of the objects using a selection commanding body, comprising:
a proximity position detecting section that detects a position to which the selection commanding body has come close, the position being defined relative to the display unit;
a temporary selection determining section that temporarily selects one of the plural objects on the basis of a proximity position detected by the proximity position detecting section;
a temporary selection notification section that notifies of the object selected temporarily by the temporary selection determining section;
a contact position detecting section that detects a position where the selection commanding body comes into contact with the display unit during notification by the temporary selection notification section; and
a regular selection determining section that determines that the temporarily selected object has been selected by the selection commanding body if a distance between a position of the temporarily selected object on the display unit and the contact position detected by the contact position detecting section is within a prescribed distance.

2. The input device according to claim 1, wherein the proximity position detecting section detects a distance between the display unit and the selection commanding body;
wherein the temporary selection determining section cancels the temporary selection if the distance between the display unit and the selection commanding body has become longer than a prescribed distance; and
wherein the temporary selection notification section stops the notification if the temporary selection is canceled by the temporary selection determining section.

3. The input device according to claim 2, wherein the temporary selection determining section temporarily selects one of the plural objects only if a distance between the display unit and the selection commanding body is in a prescribed range.

## Amended claims

### Amended claims under Art. 19.1 PCT

**1.** (Amended) An input device which has a display unit for displaying plural selectable objects and selects one of the objects using a selection commanding body, comprising:
a proximity position detecting section that detects a position to which the selection commanding body has come close, the position being defined relative to the display unit;
a temporary selection determining section that temporarily selects one of the plural objects on the basis of a proximity position detected by the proximity position detecting section;
a temporary selection notification section that notifies of the object selected temporarily by the temporary selection determining section without exerting any influence on display of other objects;
a contact position detecting section that detects a position where the selection commanding body comes into contact with the display unit during notification by the temporary selection notification section; and
a regular selection determining section that determines that the temporarily selected object has been selected by the selection commanding body if a distance between a substantially center position of the temporarily selected object on the display unit and the contact position detected by the contact position detecting section is within a prescribed distance.

**2.** (Amended) An input device which has a display unit for displaying plural selectable objects and selects one of the objects using a selection commanding body, comprising:
a proximity position detecting section that detects a position to which the selection commanding body has come close, the position being defined relative to the display unit;
a temporary selection determining section that temporarily selects one of the plural objects on the basis of a proximity position detected by the proximity position detecting section;
a temporary selection notification section that notifies of the object selected temporarily by the temporary selection determining section without enlarging the temporarily selected object;
a contact position detecting section that detects a position where the selection commanding body comes into contact with the display unit during notification by the temporary selection notification section; and
a regular selection determining section that determines that the temporarily selected object has been selected by the selection commanding body if a distance between a substantially center position of the temporarily selected object on the display unit and the contact position detected by the contact position detecting section is within a prescribed distance.

**3.** (Amended) The input device according to claim 1 or 2, wherein the proximity position detecting section detects a distance between the display unit and the selection commanding body;
wherein the temporary selection determining section cancels the temporary selection if the distance between the display unit and the selection commanding body has become longer than a prescribed distance; and
wherein the temporary selection notification section stops the notification if the temporary selection is canceled by the temporary selection determining section.

**4.** (Added) The input device according to claim 3, wherein the temporary selection determining section temporarily selects one of the plural objects only if a distance between the display unit and the selection commanding body is in a prescribed range.

**5.** (Added) An input method comprising:
displaying plural selectable objects;
detecting a position to which a selection commanding body has come close, the position being defined relative to a display unit;
temporarily selecting one of the plural objects on the basis of a detected proximity position;
notifying of the temporarily selected object without exerting any influence on display of other objects;
detecting a position where the selection commanding body comes into contact with the display unit during notification; and
determining that the temporarily selected object has been selected by the selection commanding body if a distance between a substantially center position of the temporarily selected object on the display unit and the detected contact position is within a prescribed distance.

**6.** (Added) An input method comprising:
displaying plural selectable objects;
detecting a position to which a selection commanding body has come close, the position being defined relative to a display unit;
temporarily selecting one of the plural objects on the basis of a detected proximity position;
notifying of the temporarily selected object without enlarging the temporarily selected object;
detecting a position where the selection commanding body comes into contact with the display unit during notification; and
determining that the temporarily selected object has been selected by the selection commanding body if a distance between a substantially center position of the temporarily selected object on the display unit and the detected contact position is within a prescribed distance.
